# EUROPÄISCHE PATENTANMELDUNG

(11) **EP 1 151 671 A1**
(43) Veröffentlichungstag der Anmeldung: **07.11.2001**
(21) Anmeldenummer: 00109404.4
(22) Anmeldetag: 03.05.2000
(51) Int. Cl.: A22C 13/00, C08L 93/02, C08L 31/04

(54) **Zusammensetzung zur Beschichtung von Dauerwürsten und Hartkäsen**

(71) Anmelder: Stemmler, Heinz, Jr., D-50668 Köln (DE); Stemmler, Andreas, 50668 Köln (DE)
(72) Erfinder: Stemmler, Heinz, Jr., D-50668 Köln (DE); Stemmler, Andreas, 50668 Köln (DE)
(74) Vertreter: Weber, Thomas, Dr.

(57) **Zusammenfassung**

Die Erfindung betrifft eine Zusammensetzung umfassend eine wässrige Dispersion von Schellack und einem Copolymerisat, ein Verfahren zu deren Herstellung und deren Verwendung zur Beschichtung von Dauerwürsten und Hartkäsen.

## Beschreibung

Die Erfindung betrifft eine Zusammensetzung umfassend eine wässrige Dispersion von Schellack und einem Copolymerisat aus Ethylen und Vinylacetat, ein Verfahren zur Herstellung dieser wässrigen Dispersion sowie die Verwendung der Dispersion zur Beschichtung von Lebensmitteln, die ausgewählt sind aus der Gruppe bestehend aus Dauerwürsten, die einen Natur- oder Kunstdarmüberzug aufweisen und Hartkäsen. Die Erfindung betrifft ferner ein Verfahren zur Beschichtung der genannten Lebensmittel mit der erfindungsgemäßen Zusammensetzung sowie Dauerwürste und Hartkäse, die mit dem erfindungsgemäßen Verfahren erhältlich sind.

Handelsübliche Dauerwürste (Rohwürste) weisen trotz der Natur- oder Kunstdarmumhüllung den Nachteil auf, dass es bedingt durch den Fleischsaftverlust durch die Umhüllung hindurch zu einem messbaren Gewichtsverlust des Lebensmittels kommt. Durch diesen Fleischsaftverlust durch die Umhüllung hindurch zeichnen sich diese Wurstwaren durch eine fettige Oberfläche aus. Darüber hinaus kommt es bedingt durch die derzeit übliche in dieser Hinsicht unzureichende Umhüllung, zu einem uneinheitlichen Farbbild im Querschnitt der eingeschlossenen Wurstwaren vom Inneren der Wurst zum äußeren Rand hin. Dies ist insbesondere beim Anschneiden der Würste in Form von einer mehr oder weniger breiten Randbildung an der Grenze zur Umhüllung hin deutlich sichtbar. Diese Randbildung, oftmals ohne weiteres erkennbar bei der Salami, verstärkt sich oft noch nach dem Anschnitt. Bei in Folien eingeschweißten Würsten kommt es durch den Feuchtigkeitsaustritt aus der Wurst zu einer Flüssigkeitsansammlung zwischen der Wurstoberfläche und der für Wasser undurchlässigen Folie. Darüber hinaus neigen an der Oberfläche unbehandelte Würste bei der Lagerung zur Bildung von Schimmel. Hartkäse wird zur Haltbarmachung üblicherweise mit einer Paraffinwachsschicht umhüllt. Diese wird jedoch nach einiger Zeit spröde oder brüchig, wodurch der damit erzielbare Zweck der Haltbarmachung des darin eingeschlossenen Hartkäses nicht mehr erfüllt wird. Ferner tritt trotz der Umhüllung oftmals eine Randbildung bei den eingeschlossenen Käsen auf.

Die WO-A-98/06271 beschreibt eine Zusammensetzung umfassend eine wässrig-ethanolische Lösung von Schellack und Polyamid zur Beschichtung von Dauerwürsten und Hartkäsen. Das wässrig-ethanolische Lösungsmittel enthält wenigstens 50 Gew.-% Ethanol.

Obwohl mit der Zusammensetzung bestehend aus Schellack und Polyamid auf Dauerwürsten und Hartkäsen bereits ausgezeichnete dauerhafte Beschichtungen erzielt werden konnten, war es eine Aufgabe der vorliegenden Erfindung, die Randbildung bei Dauerwürsten und Hartkäsen weiter zu reduzieren, insbesondere jedoch die Haftung der zusätzlichen Beschichtung auf der Wursthaut (Kunst- oder Naturdarm) oder dem Käse zu erhöhen. Die Beschichtungszusammensetzung sollte von der beschichteten Oberfläche leicht abtropfen, darüber hinaus schnell trocknend sein und dennoch eine gleichmäßige Beschichtung bilden. Wie bereits die in der WO-A-98/06271 beschriebene Beschichtung sollte die Beschichtung ebenfalls glatt, transparent und ausreichend elastisch sein.

Die Aufgabe wurde erfindungsgemäß gelöst durch eine Zusammensetzung umfassend in wässriger Dispersion
a) Schellack und
b) ein Ethylen/Vinylacetat-Copolymerisat.

Die erfindungsgemäße Zusammensetzung bildet auf der Wurst- bzw. der Hartkäseoberfläche eine stabile und ausreichend elastische Beschichtung, die nicht zur Rissbildung neigt. Die erfindungsgemäße wässrige Dispersion tropft von der damit behandelten Oberfläche schnell unter Bildung eines gleichmäßigen Beschichtungsfilms ab und trocknet rasch. Ein weiterer Vorteil der erfindungsgemäßen Zusammensetzung ist, dass die wässrige Dispersion keinerlei Alkohol enthält, was bei deren Transport und Anwendung regelmäßig mit sich bringt, dass besondere Vorsichtsmaßnahmen eingehalten werden müssen. So stellen Zusammensetzungen, die Ethanol enthalten, regelmäßig beim Transport ein Gefahrgut dar und deren Verwendung kann darüber hinaus nur unter Einhaltung besonderer Sicherheitsvorkehrungen erfolgen.

Die erfindungsgemäße Zusammensetzung kann zum Beschichten von Lebensmitteln verwendet werden, die ausgewählt sind aus der Gruppe bestehend aus Dauerwürsten, die eine Natur- oder Kunstdarmumhüllung aufweisen, und Hartkäsen. Dabei werden Dauerwürste erhalten, die auf der Natur- oder Kunstdarmumhüllung eine gleichmäßige, glatte, transparente und elastische dauerhafte Beschichtung umfassend den Schellack und das Copolymerisat aufweisen und die fest auf dem Natur-oder Kunstdarmüberzug haftet. Gleiches gilt für die Beschichtung von Hartkäse, wobei hier die Beschichtung direkt auf der vorher unbeschichteten Hartkäseoberfläche aufgetragen wird.

Bei den Dauerwürsten, die mit der erfindungsgemäßen Zusammensetzung beschichtet werden können, handelt es sich um alle Arten von harten bis weichen Rohwürsten (Hartwürsten), beispielsweise die Rügenwalder Teewurst (weiche Rohwurst), Salami oder Kochsalami (harte Rohwürste). Als Hartkäsesorten können alle als solche bekannten Käsesorten eingesetzt werden. Die Dauerwürste und Hartkäse können mit der erfindungsgemäßen Zusammensetzung ganz oder teilweise beschichtet werden.

Bei dem erfindungsgemäß einzusetzenden Schellack kann jeder handelsübliche Schellack verwendet werden. Bevorzugt ist jedoch entwachster und mit Aktivkohle entfärbter Schellack. Schellack ist bekanntermaßen in Alkohol, insbesondere Ethanol oder wässrigem Ethanol sehr gut löslich. Im Rahmen der Erfindung wird der Schellack jedoch als wässrig-alkalische Lösung eingesetzt, die keinen Alkohol oder andere organische Lösungsmittel enthält. Die erfindungsgemäß eingesetzten alkalischen Schellack-Lösungen enthalten 15 - 35 Gew.-%, vorzugsweise 15 bis 30 Gew.-%, besonders bevorzugt 20 bis 30 Gew.-% Schellack. Der pH-Wert der gebrauchsfertigen Schellack-Lösung beträgt 7 - 8, vorzugsweise 7,1 bis 7,7 und besonders bevorzugt bis 7,4 ± 0,1. Der pH-Wert kann durch Zugabe einer geeigneten Menge an Natriumhydroxid, Kaliumhydroxid, Natriumcarbonat oder Kaliumcarbonat erfolgen.

Zur Herstellung der erfindungsgemäß einzusetzenden wässrig-alkalischen Schellack-Lösung wird der in Blättchen oder in geschroteter, pulverisierter Form vorliegende zu lösende Schellack in einem Behälter mit Rührwerk und Heizung mit kaltem Wasser gemischt und die zur Lösung des Schellacks erforderliche Menge Alkali zugegeben. Es wird jeweils so viel Alkali zugegeben, dass sich der Schellack gerade löst. Die Mischung wird unter Rühren auf 30 bis 70, vorzugsweise 50 bis 60°C erwärmt und gerührt, bis der Schellack vollständig gelöst ist, wobei sich der oben genannte pH-Wert einstellt. Die erfindungsgemäße, anwendungsfertige Zusammensetzung enthält 10 bis 30 Gew.-%, vorzugsweise 10 bis 25 Gew.-%, besonders bevorzugt 13 bis 22 Gew.-% Schellack.

Die erfindungsgemäße Zusammensetzung enthält 5 bis 30 Gew.-%, vorzugsweise 10 bis 25 Gew.-%, besonders bevorzugt 12 bis 20 Gew.-% des EthylenNinylacetat-Copolymers. Derartige Ethylen/Vinylacetat-Copolymerisate sind im Stand der Technik seit langem bekannt. Die Copolymerisate enthalten 10 bis 30 Gew.-%, vorzugsweise 15 bis 25 Gew.-% und besonders bevorzugt 16 bis 20 Gew.-%, bezogen auf das Copolymerisat, Ethylen. Die Ethylen/Vinylacetat-Copolymerisate sind im Handel als wässrige Copolymerisat-Dispersion erhältlich. Der Feststoffgehalt dieser Dispersionen liegt zwischen 45 und 60 Gew.-%, vorzugsweise zwischen 50 und 58 Gew.-%, ganz besonders bevorzugt 55 Gew.-%, der pH-Wert beträgt zwischen 3 und 5, vorzugsweise zwischen 3,5 und 5 (ISO 1148) und die Viskosität liegt zwischen 3000 und 12.000 mPa • s (23°C), vorzugsweise zwischen 5000 und 9500 (ISO 2555). Geeignete Copolymerisat-Dispersionen sind beispielsweise unter dem Handelsnamen Mowilith® , Handelsprodukte der Firma Clariant, Deutschland, erhältlich. Besonders bevorzugt im Rahmen der Erfindung kann Mowilith® DM 105 oder Mowilith® DM 1062 eingesetzt werden, aber auch jede andere Vinylacetat-Ethylen-Copolymerisat-Dispersion wie oben beschrieben.

Die Gesamtkonzentration von Schellack und Ethylen/Vinylacetat-Copolymerisat in der erfindungsgemäßen Zusammensetzung beträgt bis zu 50 Gew.-%, vorzugsweise bis zu 40 Gew.-% und besonders bevorzugt bis zu 35 Gew.-%. Für Beschichtungen geringerer Schichtdicke auf den Dauerwürsten sind geringere Konzentrationen, für die Beschichtungen der Hartkäse können höhere Konzentrationen eingesetzt werden, um größere Schichtdicken bei der Beschichtung zu erzielen.

Die erfindungsgemäße Zusammensetzung kann ferner bis zu 20 Gew.-%, vorzugsweise bis zu 15 Gew.-%, bezogen auf die wässrige Dispersion, Zusatzstoffe enthalten, die ausgewählt sind aus der Gruppe bestehend aus Farbstoffen oder Pigmenten (beispielsweise Titandioxid oder Eisenoxid) oder den Pigmenten gelb oder rot für Hartkäse. Darüber hinaus kann die erfindungsgemäße Zusammensetzung ferner bis zu 2 Gew.-%, vorzugsweise bis zu 1 Gew.-% üblicher Konservierungsstoffe enthalten.

Die erfindungsgemäße wässrige Zusammensetzung kann hergestellt werden durch Mischen der oben definierten wässrigen Lösung von Schellack mit der oben beschriebenen wässrigen Ethylen/Vinylacetat-Copolymerisat-Dispersion. Hierzu wird beispielsweise die Copolymerisat-Dispersion in die Schellack-Lösung eingerührt, so dass die oben genannten Gesamtkonzentrationen und Gewichtsanteile von Schellack und Copolymerisat erhalten werden. Das Vermischen erfolgt bei Raumtemperatur (20°C). Gegebenenfalls kann das Verrühren der beiden Dispersionen unter erhöhter Temperatur, vorzugsweise bis zu 30°C erfolgen. Der pH-Wert der anwendungsfertigen erfindungsgemäßen Zusammensetzung beträgt zwischen 7 und 9, vorzugsweise zwischen 7 und 7,5, besonders bevorzugt zwischen 7,1 und 7,3. Der pH-Wert kann durch Zugabe von Alkalien wie NaOH, KOH, Na₂CO₃ oder K₂CO₃ eingestellt werden. Die erfindungsgemäße Zusammensetzung ist bei Raumtemperatur über mehrere Monate hinweg lagerfähig.

Gemäß dem erfindungsgemäßen Verfahren zum Beschichten der Dauerwürste, die eine Natur- oder Kunstdarmumhüllung aufweisen, und den Hartkäsen, werden diese Lebensmittel mit der erfindungsgemäßen wässrigen Dispersion an der Oberfläche behandelt. Diese Behandlung kann dadurch erfolgen, dass die Würste oder der Käse mit der erfindungsgemäßen, gegebenenfalls erwärmten wässrigen Dispersion besprüht oder bestrichen wird oder die Würste bzw. die Käse darin eingetaucht werden. Nach dieser Behandlung lässt man die behandelten Würste bzw. Käse an der Luft trocknen, wodurch auf der Natur- oder Kunstdarmumhüllung der Dauerwürste bzw. auf dem Hartkäse eine aus Schellack und dem Ethylen/Vinylacetat-Copolymer bestehende Schicht zurückbleibt, wobei der Schellack und das Copolymerisat in den oben angegebenen Gewichtsanteilen vorliegen.

Nach dem Bestreichen, Besprühen oder Eintauchen der Ware kann man die überschüssige Lösung auch abtropfen lassen und die behandelte Ware durch eine geeignete Trocknungsvorrichtung führen, in der das Wasser im Luftstrom bei 10 bis 50 °C in Abhängigkeit von der Ware verdunstet. Da es sich hierbei nur um wässrige Lösungen handelt, sind keine besonderen Sicherheitsvorkehrungen notwendig. Erstaunlich ist das sehr rasche Trocknen der Beschichtung unter Ausbildung einer einheitlich dicken, gleichmäßigen Schicht.

Bei dem auf der Ware zurückbleibenden endgültigen Überzug handelt es sich um einen gleichmäßigen, fest haftenden, mechanisch stabilen und transparenten Film, der auch dazu geeignet ist, besonders problematische, glatte Oberflächen, wie beispielweise die Rügenwalder Teewurst, fest haftend, nachhaltig glatt und transparent zu umspannen.

Nach Trocknung besteht der Überzug aus einer Zusammensetzung aus Schellack und dem Ethylen/Vinylacetat-Copolymer sowie aus den gegebenenfalls enthaltenen Zusatzstoffen.

Die nach dem erfindungsgemäßen Verfahren erhältlichen Dauerwürste sowie Hartkäse können Schutzfilme mit einer Schichtdicke von bis zu 1 mm aufweisen. Bei der Wurstwaren sind jedoch Schichtdicken von bis zu 0,5 mm, vorzugsweise bis zu 0,2 mm und besonders bevorzugt bis zu 0,1 mm ausreichend, wohingegen Hartkäse an dessen Oberfläche mit einem Schellack/Copolymerisat-Überzug versehen werden kann, dessen Schichtdicke bis zu 0,7 vorzugsweise bis zu 0,5 und besonders bevorzugt bis zu 0,4 mm beträgt. Die minimale Schichtdicke, mit der noch eine gleichmäßige Beschichtung erhalten werden kann und die dennoch die oben genannten Vorteile mit sich bringt, beträgt jeweils 0,001 mm, vorzugsweise 0,005 mm, besonders bevorzugt 0,01 mm.

Die genannten Schichtdicken können durch Einstellung entsprechender Schellack/Copolymerisat-Konzentrationen der wässrigen Dispersion und damit der Viskosität der erfindungsgemäßen Zusammensetzung erzielt werden. Dies ist jedoch im Einzelfall zu entscheiden und im wesentlichen von der zu beschichtenden Ware abhängig.

Die Kombination von Schellack mit dem Ethylen/Vinylacetat-Copolymerisat zur Beschichtung der oben genannten Lebensmittel hat gegenüber der Beschichtung der Lebensmittel mit Filmen des jeweiligen Ethylen/Vinylacetat-Copolymerisats alleine den Vorteil, dass der erfindungsgemäße Film auf der Natur- oder Kunstdarmumhüllung der Wurstoberfläche zu einer ansprechenden Oberfläche führt. Durch die erfindungsgemäß eng anliegenden Filme wird eine Kontamination der Wurstoberfläche im Zwischenraum zwischen der Wurstoberfläche und der Beschichtung vermieden. Die Schimmelbildung konnte gegenüber Beschichtungen aus Schellack-Polyamid gemäß der WO-A-98/06271 weiter reduziert werden. Dies ist insbesondere unter warmen und feuchten Bedingungen von erheblichem Vorteil. Die erfindungsgemäße Beschichtung ist im Vergleich zur Schellack/Polyamid-Beschichtung gemäß der WO-A-98/06271 und einer alleine aus Schellack bestehenden Beschichtung wesentlich flexibler. Eine Beschichtung aus dem Ethylen/Vinylacetat-Copolymerisat alleine trocknet schlecht, riecht unangenehm und führt darüber hinaus vor allem nicht zu der gewünschten Verlangsamung der Gewichtsreduktion.

Mit einer Schellackbeschichtung alleine ist die ungleichmäßige Veränderung der Farbe der eingeschlossenen Würste und Käse (Randbildung) nicht zu vermeiden. Im übrigen ist eine Beschichtung aus Schellack alleine zu spröde und blättert daher ab.

Die erfindungsgemäß beschichteten Wurst- und Käsewaren weisen eine wesentlich bessere Haltbarkeit auf und zeigen auch nach längerer Lagerung keine Randbildung bei der eingeschlossenen Wurst bzw. dem Käse auf. Eine Schimmelbildung auch unter feucht-warmen Bedingungen wird nicht beobachtet. Darüber hinaus erhält die Oberfläche der beschichteten Ware durch den matten Glanz ein ansprechendes Äußeres. Trotz fortschreitender Reifung der Ware ist der üblicherweise damit verbundene Gewichtsverlust erheblich reduziert.

Die Erfindung wird durch die nachfolgenden Beispiele anhand der Beschichtung einer harten Rohwurst (Salami) beschrieben. Die erhaltenen Ergebnisse hinsichtlich des Gewichtsverlustes über einen gewissen Zeitraum sowie Randbildung und Geschmack treten in gleichem Umfang bzw. in gleicher Qualität auch bei der Beschichtung von anderen Dauerwürsten und Hartkäsen mit den erfindungsgemäßen Zusammensetzungen auf. Daher ist die Erfindung nicht auf dieses konkrete Beispiel beschränkt.

### Beispiele

Zur Durchführung der nachfolgend beschriebenen Beispiele wurde Schellack (Klassifizierung E 904, Schmelztemperatur 65-85°C, Säurezahl 65-80, Verseifungszahl 180-240, Wachsgehalt maximal 0,2 Gew.-%, Trocknungsverlust maximal 2,0 Gew.-%, Handelsprodukte der Firma Wolff & Ohlsen, oder der Firma Hanse Products Gutschke, jeweils Hamburg) eingesetzt. Die Herstellung der wässrig-alkalischen Schellack-Lösung erfolgt wie in der Beschreibung ausgeführt. Die zur Vermischung mit dem wässrigen Copolymerisat eingesetzte wässrige Schellack-Lösung war 20 Gew.-%ig, der pH-Wert betrug 7,3. Die Gew.-% Angaben der wässrigen Schellack-Lösung in der nachfolgenden Tabelle beziehen sich auf die eingesetzte 20 Gew.-%ige Lösung.

Als Ethylen/Vinylacetat-Copolymerisat wurde Mowilith® DM 105 (Copolymerisat A), oder Mowilith® DM 1062 (Copolymerisat B), Handelsprodukte der Firma Clariant, Deutschland, mit einem Feststoffgehalt von jeweils 55 Gew.-% eingesetzt. Die Gew.-% Angaben der Copolymer A/B Dispersionen in der nachfolgenden Tabelle beziehen sich auf die Gewichtsanteile der jeweils eingesetzten 55 Gew.-%igen wässrigen Dispersion. Die anwendungsfertige Beschichtungszusammensetzung wurde durch Verrühren der Schellack-Lösung mit der wässrigen Copolymerisat-Dispersion in den in der Tabelle angegebenen Gewichtsanteilen erhalten und wies einen pH-Wert von 7,2 auf. Die anwendungsfertige Beschichtungszusammensetzung enthielt keine zusätzlichen Konservierungsmittel.
Die Salami wurde kurz in die jeweilige Beschichtungszusammensetzung getaucht und an der Luft unter jeweils identischen Bedingungen getrocknet. Die beschichteten Rohwürste wurden sodann unter identischen Bedingungen über 27 Tage gelagert. Ein ebenfalls durchgeführter, jedoch in nachfolgender Tabelle nicht aufgeführter Vergleichsversuch mit einer Schellack-Beschichtung aus Schellack (analog aufgetragen aus einer herkömmlichen wässrig-ethanolischen Schellack-Lösung) lieferte keinen brauchbaren Überzug (bröselt ab). Die in der nachfolgenden Tabelle wiedergegebenen Ergebnisse wurden als Mittel von fünf Einzelbestimmungen ermittelt. Die Anschnittfläche der Würste war in allen Fällen einheitlich rot und wies keine Randbildung auf. Die erfindungsgemäß behandelten Würste (Versuche 1 bis 3) zeigten auch nach 27 Tagen Lagerung keine Schimmelbildung an der Oberfläche, wohingegen die unbehandelten Würste (Versuch 5) bereits nach wenigen Tagen Schimmel ansetzten.

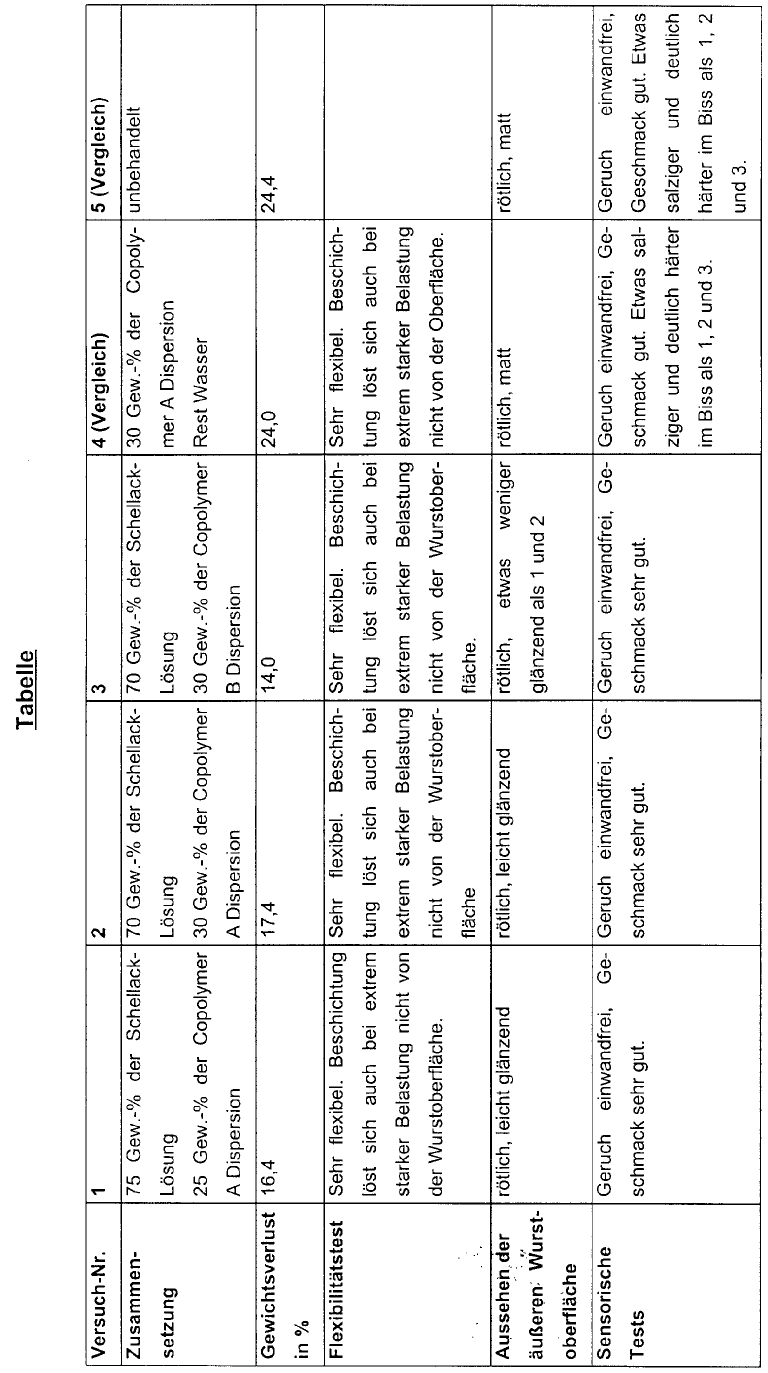

## Patentansprüche

1. Zusammensetzung umfassend in wässriger Dispersion
a) Schellack und
b) ein Copolymerisat von Ethylen und Vinylacetat.

2. Zusammensetzung nach Anspruch 1, **dadurch gekennzeichnet, dass** sie
a) 10 bis 30 Gew.-% Schellack und
b) 5 bis 30 Gew.-% des Ethylen/Vinylacetat-Copolymerisats enthält.

3. Zusammensetzung nach Anspruch 1 oder 2, **dadurch gekennzeichnet, dass** sie den Schellack und das Ethylen/Vinylacetat-Copolymerisat in einer Gesamtkonzentration von bis zu 50 Gew.-% aufweist.

4. Zusammensetzung nach irgendeinem der Ansprüche 1 bis 3, **dadurch gekennzeichnet, dass** sie einen pH-Wert von 7 bis 9 aufweist.

5. Zusammensetzung nach irgendeinem der Ansprüche 1 bis 4, **dadurch gekennzeichnet, dass** das Ethylen/Vinylacetat-Copolymerisat 10 bis 30 Gew.-%, bezogen auf das Copolymerisat, Ethylen enthält.

6. Verfahren zur Herstellung der wässrigen Dispersion nach irgendeinem der Ansprüche 1 bis 5 durch Mischen von
a) einer wässrigen Lösung von Schellack mit
b) einer wässrigen Ethylen/Vinylacetat-Copolymerisat-Dispersion.

7. Verfahren nach Anspruch 6, **dadurch gekennzeichnet, dass** die wässrige Schellack-Lösung 15 bis 35 Gew.-% Schellack enthält.

8. Verfahren nach Anspruch 6, **dadurch gekennzeichnet, dass** die wässrige Ethylen/Vinylacetat-Dispersion einen Festkörpergehalt von 46 bis 60 Gew.-% aufweist.

9. Verfahren nach irgendeinem der Ansprüche 6 bis 8, **dadurch gekennzeichnet, dass** das Mischen der Schellack-Dispersion und der Copolymerisat-Dispersion in einem Verhältnis so erfolgt, dass die Endkonzentration 10 bis 30 Gew.-% Schellack und 5 bis 30 Gew.-% Copolymerisat, bezogen auf die Gesamtdispersion, beträgt.

10. Verfahren nach irgendeinem der Ansprüche 6 bis 9, **dadurch gekennzeichnet, dass** der pH-Wert der wässrigen Schellack/Copolymerisat-Dispersion auf 7 bis 8 eingestellt wird.

11. Verwendung der Zusammensetzung nach irgendeinem der Ansprüche 1 bis 5 zur teilweisen oder vollständigen Beschichtung von Lebensmitteln, die ausgewählt sind aus der Gruppe bestehend aus Dauerwürsten, die eine Natur- oder Kunstdarmumhüllung aufweisen, und Hartkäsen.

12. Verfahren zum Beschichten von Lebensmitteln, die ausgewählt sind aus der Gruppe bestehend aus Dauerwürsten, die eine Natur- oder Kunstdarmumhüllung aufweisen, und Hartkäsen durch Behandlung der Oberfläche der Dauerwürste oder der Hartkäse mit der wässrigen Dispersion wie in irgendeinem der Ansprüche 1 bis 5 definiert.

13. Verfahren gemäß Anspruch 12, **dadurch gekennzeichnet, dass** das Beschichten durch Tauchen, Besprühen oder Bestreichen mit der wässrigen Dispersion erfolgt.

14. Verfahren nach Anspruch 12, **dadurch gekennzeichnet, dass** die Beschichtung der behandelten Würste oder Käse anschließend im Luftstrom bei einer Temperatur von 10 bis 50°C getrocknet wird.

15. Verfahren nach Anspruch 12, **dadurch gekennzeichnet, dass** die trockene Beschichtung eine Schichtdicke von bis zu 1 mm aufweist.

16. Lebensmittel ausgewählt aus der Gruppe bestehend aus Dauerwürsten, die einen Natur- oder Kunstdarmüberzug aufweisen, und Hartkäsen erhältlich nach dem Verfahren wie in irgendeinem der Ansprüche 12 bis 15 definiert.
